# EUROPÄISCHE PATENTSCHRIFT

(11) **EP 0 903 423 B1**
(45) Veröffentlichungstag und Bekanntmachung des Hinweises auf die Patenterteilung: **05.11.2003**
(21) Anmeldenummer: 98117213.3
(22) Anmeldetag: 10.09.1998
(51) Int. Cl.: C23C 4/12, C23C 4/18

(54) **Verfahren zum Aufbringen einer Beschichtung mittels Plasmaspritzens**
Coating deposition process by plasma spraying
Procédé de déposition d'un revêtement par pulvérisation par plasma

(30) Priorität: 12.09.1997 DE 19740205
(43) Veröffentlichungstag der Anmeldung: 24.03.1999
(73) Patentinhaber: FRAUNHOFER-GESELLSCHAFT ZUR FÖRDERUNG DER ANGEWANDTEN FORSCHUNG E.V., 80636 München (DE)
(72) Erfinder: Beyer, Eckard Prof. Dr.-Ing., 52159 Rott/Roetgen (DE); Nowotny, Steffen Dr.-Ing., 01445 Radebeul (DE)
(74) Vertreter: Pfenning, Meinig & Partner

(56) Entgegenhaltungen:
- EP-A- 0 580 534
- FR-A- 2 715 942
- PATENT ABSTRACTS OF JAPAN vol. 018, no. 686 (C-1292), 26. Dezember 1994 (1994-12-26) -& JP 06 272012 A (HIROFUMI SHIMURA;OTHERS: 07), 27. September 1994 (1994-09-27)
- PATENT ABSTRACTS OF JAPAN vol. 012, no. 299 (C-520), 15. August 1988 (1988-08-15) & JP 63 069959 A (MITSUBISHI ELECTRIC CORP), 30. März 1988 (1988-03-30)
- DATABASE WPI Section Ch, Week 199018 Derwent Publications Ltd., London, GB; Class M13, AN 1990-137781 XP002162353 & SU 1 514 823 A (LENGD KALININ POLY), 15. Oktober 1989 (1989-10-15)

## Beschreibung

Die Erfindung betrifft ein Verfahren zum Aufbringen einer Beschichtung mittels Plasmaspritzens, das für die Beschichtung verschiedenster Substrate, insbesondere für die Verbesserung der Eigenschaften, wie z.B. Härte, Verschleiß- und Korrosionsbeständigkeit, geeignet ist und mit dem hohe Beschichtungsleistungen erreichbar sind.

Aus US 3,310,423 ist ein Flammspritzverfahren bekannt, bei dem zur Unterstützung ein gepulster Laserstrahl verwendet werden soll, um die Haftung der Beschichtung und deren Dichte zu verbessern bzw. zu erhöhen.

Dabei wird dort vorgeschlagen, den zeitlich kurz gepulsten Strahl eines Lasers in einen Spritzstrahl zu richten und zwar so, daß die Partikel vor dem Auftreffen auf die zu beschichtende Oberfläche nochmals erwärmt werden. Es wird dort weiter vorgeschlagen die Partikeltemperatur soweit zu erhöhen, daß durch Wärmeübertragung der Partikel die Oberfläche erweicht wird und mit dem Partikelwerkstoff eine Legierung bildet. Bei einem Mehrschichtaufbau soll die Oberfläche der obersten Schicht aufgeschmolzen und ein Verschmelzen mit den aufgespritzten Partikeln erreicht werden.

Mit den angegebenen Leistungsparametern kann jedoch nur eine begrenzte Energie zur Temperaturerhöhung bei gepulstem Betrieb des Lasers zur Verfügung gestellt werden, so daß nur relativ geringe Beschichtungsraten erreicht werden können oder der gewünschte Erfolg nicht erreicht werden kann.

Außerdem kann ein Einfluß auf andere Eigenschaften der aufgebrachten Beschichtung genommen werden, die für die verschiedensten Beschichtungsmaterialien wieder unterschiedlich gewünscht sind. So können sich z.B. beim Abkühlen Phasen bzw. Gefüge- oder kristalline Strukturen ausbilden, die die gewünschten Eigenschaften nicht oder nur unzureichend aufweisen. Beim Aufbringen einer Beschichtung, die zumindest Al₂O₃ enthält, kann die γ-Phase gebildet werden, deren Eigenschaften weit von denen der bevorzugten α-Phase liegen. Ähnliche Effekte treten auch bei Metallen oder solchen Legierungen auf. Durch Flammspritzen, auch mit der dort vorgeschlagenen Laserunterstützung, kann z.B. Al₂O₃ aufgrund des hohen Schmelzpunktes überhaupt nicht zu brauchbaren Schichten verarbeitet werden.

Des weiteren ist aus JP(A) 06272012 ein Beschichtungsverfahren, bei dem die Beschichtung mittels Plasmaspritzens und zusätzlich eingesetztem Laserstrahl ausgebildet werden soll. Mit Hilfe des Laserstrahles soll dabei die Oberfläche des zu beschichtenden Substrates aufgeschmolzen werden und durch Erzeugung eines intermetallischen Verbundes eine verbesserte Schichthaftung erreicht werden.

In JP(A) 63069959 ist ebenfalls eine Lösung beschrieben, bei der beim Plasmaspritzen zusätzlich ein Laserstrahl eingesetzt werden soll. Der Laserstrahl soll auf die Oberfläche der Schicht gerichtet sein, um die Schicht zu schmelzen, so daß Poren in der Schicht geschlossen werden können.

Eine ähnliche Lösung, bei der ein Laserstrahl in Verbindung mit einer Plasmabeschichtung eingesetzt werden soll, ist in FR 2715942 A1 beschrieben.

Ausgehend hiervon, ist es daher Aufgabe der Erfindung ein Verfahren vorzuschlagen, mit dem Beschichtungen mit hoher Beschichtungsrate, bei denen neben guter Haftung und Dichte der Schicht auch gezielt Einfluß auf die sich ausbildende Schichtstruktur genommen werden kann, auf verschiedenste Substrate aufgebracht werden können.

Erfindungsgemäß wird diese Aufgabe mit den Merkmalen des Anspruchs 1 gelöst. Vorteilhafte Ausgestaltungsformen und Weiterbildungen der Erfindung ermöglichen die in den untergeordneten Ansprüchen genannten Merkmale.

Bei dem neuen und erfindungsgemäßen Verfahren wird das Beschichtungsmaterial auf bekannte Art mit einem Plasmabrenner auf die Oberfläche des zu beschichtenden Substrates gespritzt. Dabei hat der Plasmabogen keinen Kontakt mit der Werkstückoberfläche und der Wärmeinhalt des Spritzstrahls reicht nicht aus, um das Substrat an dessen Oberfläche anzuschmelzen, um einen Schmelz- und/oder Diffusionsverbund zwischen Beschichtung und Substrat zu erreichen. Dies wird jedoch dadurch erreicht, in dem ein defokussierter Laserstrahl zumindest teilweise durch den Spritzstrahl auf die Oberfläche des Substrates cder die Oberfläche einer bereits dort aufgebrachten Schicht mit vorgebbarer Wechselwirkungszeit gerichtet wird. Die Energie des Laserstrahles soll dabei so groß sein, daß durch ihn die Oberfläche angeschmolzen wird, wobei es günstig ist, das Anschmelzen bis zu einer Tiefe von ca. 0,1 mm zu erreichen. Außerdem ist es wünschenswert die Temperaturen so zu beeinflussen, daß die aufgespritzten Teilchen des Beschichtungsmaterials miteinander verschmelzen, wobei dem Beschichtungsmaterial bei Bedarf ein geeignetes Flußmittel (z.B. Bor oder Silizium) zugegeben sein kann.

Der zu verwendende Laserstrahl weist eine Leistung auf, die im Bereich von 2 bis 15 %, besonders vorteilhaft im Bereich zwischen 5 und 10 %, der Leistung des Plasmabogens liegt.

Bei dem erfindungsgemäßen Verfahren durchdringt der Laserstrahl zwar den Spritzstrahl, entfaltet seine Wirkung jedoch erst auf der Oberfläche des zu beschichtenden Substrates oder einer bereits dort schon aufgebrachten Schicht voll, so daß die jeweilige Oberfläche angeschmolzen und die bereits dort aufgetroffenen Spritzteilchen auf Schmelztemperatur gehalten werden, um ein Verschmelzen untereinander zu ermöglichen. Dabei erfolgt die hierfür erforderliche Erwärmung durch den Laserstrahl in einem entsprechend lokal begrenzten Bereich. Werden zumindest Metalle enthaltende Beschichtungsmaterialien verwendet, kann eine metallurgische Bindung mit hoher Dichte, hoher Haftfestigkeit und Homogenität erhalten werden.

Vorteilhaft wird der defokussierte Laserstrahl in einem Winkel zwischen 0 und 90° auf die Oberfläche gerichtet und so eine vom kreisrunden Brennfleck abweichende Brennfleckausbildung erreicht. Der Winkel zwischen Oberfläche und Laserstrahl sollte bevorzugt zwischen 10 und 80 ° liegen. Der Winkel zwischen Laser- und Spritzstrahl sollte zwischen 0 und 90 ° und bevorzugt zwischen 0 bis 45 ° betragen.

Da der Brennfleck auf der Substratoberfläche nicht die gesamte Fläche des Plasmastrahles, trotz Defokussierung abdeckt, kann der Laserstrahl mit geeigneten Mitteln, wie z.B. Spiegeln ausgelenkt werden und dies sollte selbstverständlich zusätzlich unter Berücksichtigung der Relativbewegung zwischen Spritzstrahl und Substrat erfolgen. Dabei können Schwingspiegelsysteme oder Facettenspiegel verwendet werden, mit denen neben der Brennfleckgeometrie auch die Intensitätsverteilung beeinflußbar ist. Der Laserstrahl sollte jedoch zumindest teilweise unmittelbar im Bereich der sich bildenden Schicht geführt werden, wobei er jedoch auch zum Vorwärmen und Halten der Temperatur benutzt werden kann.

Die Strahlformung sollte zweckmäßigerweise durch einoder zweidimensionale Strahloszillation unter Verwendung von oszillierenden Planspiegeln erfolgen. Im einfachsten Falle kann dies ohne Kopplung mit der Laserleistungssteuerung geschehen. Es ist hierdurch ein variabel einstellbarer Laserbrennfleck erzielbar, der z.B. die Form eines Rechtecks annimmt. Mit Rücksicht auf die erforderlichen Strahlintensitäten von einigen 10³ W/cm² kann so zumindest die gesamte Breite der mit dem Spritzstrahl aufgebrachten Beschichtungsspur überstrichen werden.

Unabhängig von der Art der Strahlformung kann es günstig sein, durch eine geeignete Kombination von Laser-, Plasma- und Spritzparametern die sich bildende, erstarrende und abkühlende Schicht thermisch so zu beeinflussen, daß sich bestimmte gewünschte Gefügezustände und Phasen ausbilden können. Dieses wird erreicht, indem im Gegensatz zum unbeeinflußten, schroffen Erstarrungs- und Abkühlverlauf durch die Einwirkung des Laserstrahls, je nach Werkstoffkombination und gewünschten Schichteigenschaften, gezielt auf eine Temperaturerhöhung, das Halten einer bestimmten Temperatur in der Schicht oder auf die räumlichen und zeitlichen Temperaturgradienten während des Abkühlvorganges Einfluß genommen werden kann.

Es kann beispielsweise bei einer Leistung eines Plasmabrenners von 20 kW, ein Laser mit einer Leistung von 1,5 kW verwendet werden, dessen Brennfleck auf 5 bis 10 mm defokussiert auf die Oberfläche gerichtet wird. Als geeignete Laser haben sich Nd-YAG-Laser mit einer Wellenlänge von 1,06 µm oder Diodenlaser in diesem Leistungsbereich mit Wellenlängen von 0,94 µm herausgestellt. Es können aber auch andere Laser eingesetzt werden, wobei das Absorptionsverhalten der Oberflächen berücksichtigt werden kann, um den Wirkungsgrad so hoch als möglich zu halten. Bei einer entsprechenden Auslegung der Laserstrahlparameter kann mit dem Spritzstrahl eine Spurbreite von ca. 20 mm erreicht werden, wenn der Laserstrahl, wie bereits beschrieben manipuliert wird.

Das erfindungsgemäße Verfahren kann weitergebildet werden, indem die Laserleistung während der zweidimensionalen Auslenkung des Laserstrahles ortsaufgelöst gesteuert wird, so daß eine gewünschte Temperaturverteilung an der Oberfläche des Substrates und in der aufgebrachten Schicht eingehalten werden kann, wobei die unterschiedlichen Geschwindigkeiten, mit denen der Laserstrahl geführt wird und die unterschiedlichen Aufgaben (Aufheizen bzw. Halten einer gewünschten Temperatur) berücksichtigt werden können.

Vorteilhaft sollte der Laserstrahl so geführt werden, daß er der Form eines Rechteckes folgt, was sich günstig auf das resultierende Temperaturregime und die Anpassung an den Auftreffort der Spritzteilchen auswirkt.

Weiterhin sollten nicht nur die Laserleistung, die Laserstrahlintensität und die Auslenkungsgeschwindigkeit des Laserstrahles unter Berücksichtigung der Materialien für die Beschichtung und des Substrates (insbesondere deren Schmelztemperatur und Wärmeleitfähigkeit), sondern auch die Plasmaparameter, die Arbeits- und Vorschubgeschwindigkeit, der Spur- und der Spritzabstand eingestellt werden und/oder mehrere dieser Parameter aufeinander abgestimmt werden.

Das Verfahren kann unter normalen atmosphärischen Bedingungen durchgeführt werden, es kann aber auch günstig sein, den Ort der Schichtbildung mit einem inerten oder reaktiven Gas zu umgeben. Für bestimmte Beschichtungen kann hierfür z.B. Stickstoff eingesetzt werden, der ggf. mit dem Beschichtungsmaterial reagiert und als Reaktivgas wirkt.

Für bestimmte Fälle kann es günstig sein, zwei Laser zu verwenden, die unterschiedliche Bereiche der Substratoberfläche bestrahlen und so noch besser Einfluß auf die Temperaturen an den verschiedenen Orten entlang der Spur genommen wird. Die Laser können unterschiedliche Leistungen oder Wellenlängen aufweisen.

Ähnlich kann aber auch ein Strahlteiler verwendet werden, der den Laserstrahl des einen Lasers in zwei Strahlen aufteilt und diese dann parallel zueinander in einem Abstand oder vollständig unabhängig voneinander geführt werden. Auch die beiden Teilstrahlen können unterschiedliche Leistungsanteile aufweisen oder mit unterschiedlicher Strahlintensität auf die Oberfläche des Substrates gerichtet werden.

Als Beschichtungsmaterialien können verschiedene Metalle, Metallegierungen, karbidische Hartstoffe, Keramik oder Gemische davon verwendet werden, die bevorzugt pulverförmig sind.

So kann beispielsweise eine Al₂O₃-Beschichtung aufgebracht werden, die durch die nunmehr mögliche Temperaturbeeinflussung überwiegend die gewünschte α-Phase aufweist.

Es können aber auch andere relativ hochschmelzende Materialien für die Beschichtung verwendet werden.

Das Verfahren kann so geführt werden, daß die Beschichtung als Mehrschichtaufbau durch nachfolgenden Auftrag mehrerer relativ dünner Einzelschichten (Dicke ca. 0,01 bis 0,3 mm) aufgebracht wird, wobei auch ein Wechselschichtaufbau verschiedener Materialien möglich ist.

Nachfolgend soll die Erfindung an einem Beispiel näher beschrieben werden.

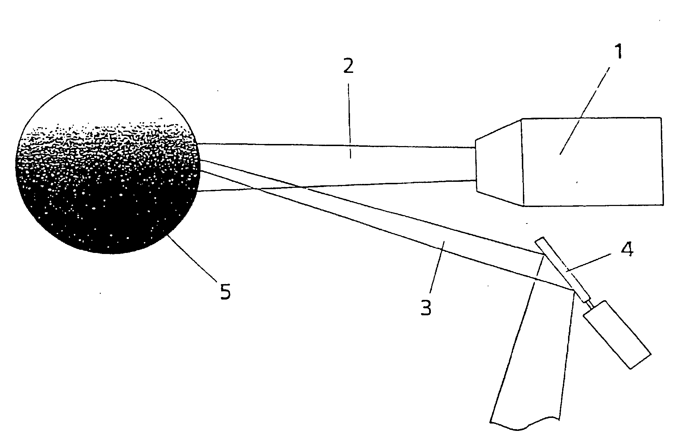

Dabei zeigt die einzige Figur 1 den prinzipiellen Aufbau mit dem das Verfahren durchgeführt werden kann.

Nach diesem Beispiel soll eine verschleiß- und temperaturbeständige Beschichtung mit einer Schichtdicke von 1 mm auf einem rotationssymmetrischen Bauteil aus einem Warmstahl mit einem Außendurchmesser von 120 mm aufgebracht werden.

Als Beschichtungswerkstoff wird eine CoCrWC-Legierung in Pulverform, die handelsüblich erhältlich ist, verwendet. Das Pulver auf Cobalt-Basis enthält 28 Masse-% Cr, 4 Masse-% W und 1,7 Masse-% C.

Für das Aufspritzen auf das Bauteil 5 (Substrat) wird ein Plasmabrenner 1 mit einer Leistung von 20 kW genutzt.

Zusätzlich wird ein 1,5 kW Diodenlaser mit einer Wellenlänge von 0,94 µm verwendet, dessen Laserstrahl 3 mit einer Linse mit einer Brennweite von 400 mm fokussiert ist und in Verbindung mit einem oszillierenden Planspiegel 4 so angeordnet ist, daß der Laserstrahl 3 mit einem Winkel von ca. 30 ° zum Plasmastrahl 2 auf die Bauteiloberfläche gerichtet wird. Der Laserstrahl 3 durchdringt den Plasmastrahl 2 auf einer kurzen Strecke und trifft direkt und defokussiert auf die Bauteiloberfläche im Bereich der sich ausbildenden Schicht auf. Durch den oszillierenden Spiegel 4 wird der Brennfleck des Laserstrahles 3 zu einem Rechteck geformt, der bei diesem Beispiel die Abmessungen von 2 x 10 mm² erreicht. Die Oszillationsfrequenz des Spiegels liegt bei 300 Hz.

Die Beschichtung wird in mehreren Einzellagen aufgebracht, wobei Schichtdicken zwischen 0,05 und 0,08 mm erreicht werden. Dadurch ergibt sich, bezogen auf die Fläche des Laserbrennfleckes, ein relativ kleines bereits auf Schmelztemperatur oder darüberhinaus erwärmtes Volumen des Schichtmaterials (1500 - 2000 ° C), das der Laserstrahl 3 ohne weiteres ausreichend lange auf Schmelztemperatur halten kann, so daß die aufgespritzten Teilchen untereinander und mit der Bauteiloberfläche bzw. der dementsprechenden Schicht verschmelzen können.

Indem der Plasmabrenner 1 den Hauptteil der Prozeßwärme zur Verfügung stellt und das Zusatzmaterial bereits im Plasmabrenner 1 vollständig aufgeschmolzen wird, können selbst bei den vergleichsweise geringen Laserleistungen von 1 bis 2 kW hohe Beschichtungsraten erzielt werden. So liegen die erreichbaren Umfangsgeschwindigkeiten am Bauteil 5 bei 4 bis 8 m/min. Wenn der Vorschub auf 8 mm/Umdrehung eingestellt wird, ergibt sich ein Überlappungsgrad der Laserstrahlbahnen von 20 %, der in vorteilhafter Weise ein geschlossen laserbeeinflußtes Gefüge erzeugt.

Die aufgebrachte Beschichtung hatte eine wesentlich bessere Haftung durch die über weite Bereiche ausgebildete metallurgische Bindung, die durch das partielle Anschmelzen von Bauteil- und Beschichtungsmaterial eingestellt wurde, gegenüber allein durch Plasmaspritzen aufgebrachten Schichten.

Die Beschichtung verfügte über eine Dichte zwischen 90 und 98 % der theoretischen Dichte.

## Patentansprüche

1. Verfahren zum Aufbringen einer Beschichtung mittels Plasmaspritzens auf ein Substrat, bei dem zusätzlich der Strahl eines Lasers verwendet wird,
dabei der kontinuierliche defokussiert Laserstrahl (3) durch den Spritzstrahl (2) mit vorgebbarer Wechselwirkungszeit direkt auf die Oberfläche des Substrates (5) oder die Oberfläche einer bereits dort aufgebrachten Schicht, diese anschmelzend, gerichtet und die Laserleistung im Bereich zwischen 2 und 15% der Leistung des Plasmabogens liegt und die Strahlformung so eingestellt werden, daß ein Strahlintensidäten bei einigen 10³ W/cm³ liegen und die Temperatur der aufgebrachten Schicht oberhalb des unbeeinflußten Abkühlungsverlaufes auf einer bestimmten Temperatur in der Schicht zur gezielten Beeinflussung der sich in der Schicht ausbildenden Phasen oder des Gefüges gehalten wird.

2. Verfahren nach Ansprüch 1, **dadurch gekennzeichnet, daß** der Laserstrahl (3) in einem Winkel zwischen 0 und 90° auf die Oberfläche des Substrates (5) und/oder im Winkel zum Spritzstrahl im Bereich zwischen 0 und 90 ° gerichtet wird.

3. Verfahren nach Ansprüch 1 oder 2, **dadurch gekennzeichnet, daß** der Laserstrahl (3) in Abhängigkeit der Relativbewegung des Plasmastrahles (2) entlang der Oberfläche des Substrates (5) bewegt wird.

4. Verfahren nach einem der Ansprüche 1 bis 3, **dadurch gekennzeichnet, daß** die Beschichtung als Mehrschichtaufbau mehrerer dünner übereinander liegender Einzelschichten auf dem Substrat (5) aufgebracht wird.

5. Verfahren nach einem der Ansprüche 1 bis 4, **dadurch gekennzeichnet, daß** der Laserstrahl (3) mit einem Schwingspiegelsystem (4) oder einem Facettenspiegel in Bezug auf die Brennfleckgeometrie und/oder auf die Intensitätsverteilung im Brennfleck beeinflußt wird.

6. Verfahren nach einem der Ansprüche 1 bis 5, **dadurch gekennzeichnet, daß** die Laserleistung bei der zweidimensionalen Oszillation des Laserstrahles (3) entlang der mit dem Spritzstrahl (2) beschichteten Oberfläche des Substrates (5) ortsabhängig gesteuert und somit ein bestimmtes dreidimensionales Intensitätsprofil im Brennfleck des Laserstrahles erzeugt wird.

7. Verfahren nach einem der Ansprüche 1 bis 6, **dadurch gekennzeichnet, daß** der Laserstrahl (3) einen rechteckigen Brennfleck ausbildend, über den zu beschichtenden Oberflächenbereich des Substrates (5) zumindest teilweise unmittelbar im Bereich der sich bildenden Schicht geführt wird.

8. Verfahren nach einem der Ansprüche 1 bis 7, **dadurch gekennzeichnet, daß** die Laserleistung, die Laserstrahlintensität, die Plasmaparameter, die Arbeits- und Vorschubgeschwindigkeit, der Spurund/oder der Spritzabstand in Abhängigkeit des Substrat- und des Beschichtungsmaterials eingestellt wird/werden oder mehrere dieser Parameter aufeinander abgestimmt werden.

9. Verfahren nach einem der Ansprüche 1 bis 8, **dadurch gekennzeichnet, daß** ein Nd-YAG oder ein Dioden-Laser verwendet wird.

10. Verfahren nach einem der Ansprüche 1 bis 9, **dadurch gekennzeichnet, daß** ein zweiter Laser verwendet wird.

11. Verfahren nach einem der Ansprüche 1 bis 10, **dadurch gekennzeichnet, daß** ein Laserstrahl in zwei Strahlen aufgeteilt auf die Oberfläche des Substrates (5) gerichtet wird.

12. Verfahren nach Anspruch 10 oder 11, **dadurch gekennzeichnet, daß** die beiden Laserstrahlen unterschiedliche Leistungen, Brennfleckengeometrien und/oder Intensitätsverteilungen aufweisen.

13. Verfahren nach einem der Ansprüche 1 bis 12, **dadurch gekennzeichnet, daß** als Beschichtungswerkstoff Metalle, Metallegierungen, karbidische Hartstoffe, Keramik oder Gemische davon verwendet werden.

14. Verfahren nach Anspruch 13, **dadurch gekennzeichnet, daß** pulverförmiger Beschichtungswerkstoff verwendet wird.

15. Verfahren nach einem der Ansprüche 1 bis 14, **dadurch gekennzeichnet, daß** zusätzlich zum Trägergas des Pulvers ein Schutz- oder Prozeßgas, das die Bildung bestimmter Phasen in der Schicht ermöglicht oder unterdrückt, verwendet wird.

16. Verfahren nach Anspruch 15, **dadurch gekennzeichnet, daß** als Schutz- oder Prozeßgas Stickstoff, Argon, Helium, Wasserstoff, Sauerstoff, Methan oder Gemische davon verwendet werden.

## Claims

1. A method for applying a coating to a substrate by means of plasma spraying wherein the beam of a laser is additionally used,
at the same time, said continuous defocused laser beam (3) is directed through the spray jet (2), with a predeterminable interaction time, directly onto the surface of the substrate (5) or the substrate of a layer which has already been applied thereto and premature melting it, and wherein the laser performance is within the range of 2 and 15% of the performance of the plasma arc, and beam shaping is adjusted such that the beam intensities are at some 10³ W/cm³, and the temperature of the applied layer is kept above the unaffected cooling profile at a defined temperature inside said layer for selectively influencing the phases forming inside said layer or the microstructure.

2. Method according to Claim 1, **characterized in that** the laser beam (3) is directed at an angle of between 0 and 90° onto the surface of the substrate (5) and/or at an angle lying between 0 and 90° with respect to the spray jet.

3. Method according to Claim 1 or 2, **characterized in that** the laser beam (3) is moved along the surface of the substrate (5) as a function of the relative movement of the plasma jet (2).

4. Method according to one of Claims 1 to 3, **characterized in that** the coating is applied to the substrate (5) as a multi-layer build-up of a plurality of thin superposed individual layers.

5. Method according to one of Claims 1 to 4, **characterized in that** the laser beam (3) is influenced, with regard to the focal spot geometry and/or the intensity distribution in the focal spot, by means of an oscillating mirror system (4) or a faceted mirror.

6. Method according to one of Claims 1 to 5, **characterized in that** the laser power, under the two-dimensional oscillation of the laser beam (3), is controlled as a function of location along the surface of the substrate (5) which is coated with the spray jet (2) and thus a specific three-dimensional intensity profile is produced in the focal spot of the laser beam.

7. Method according to one of Claims 1 to 6, **characterized in that** the laser beam (3), forming a rectangular focal spot, is guided over that region of the surface of the substrate (5) which is to be coated at least to some extent directly in the region of the layer which is being formed.

8. Method according to one of Claims 1 to 7, **characterized in that** the laser power, the laser-beam intensity, the plasma parameters, the working and feed rate, the trace distance and/or the spray distance is/are set as a function of the substrate and coating material, or a plurality of these parameters are adapted to one another.

9. Method according to one of Claims 1 to 8, **characterized in that** a Nd-YAG or a diode laser is used.

10. Method according to one of Claims 1 to 9, **characterized in that** a second laser is used.

11. Method according to one of Claims 1 to 10, **characterized in that** the laser beam is divided into two beams which are directed onto the surface of the substrate (5).

12. Method according to Claim 10 or 11, **characterized in that** the two laser beams have different powers, focal spot geometries and/or intensity distributions.

13. Method according to one of Claims 1 to 12, **characterized in that** metals, metal alloys, hard carbide materials, ceramic or mixtures thereof are used as the coating material.

14. Method according to Claim 13, **characterized in that** pulverulent coating material is used.

15. Method according to one of Claims 1 to 14, **characterized in that** a protective gas or process gas which allows or suppresses the formation of certain phases in the layer is used in addition to the carrier gas for the powder.

16. Method according to Claim 15, **characterized in that** nitrogen, argon, helium, hydrogen, oxygen, methane or mixtures thereof are used as the protective gas or process gas.

## Revendications

1. Procédé d'application d'un revêtement sur un substrat par projection plasma, dans lequel on utilise en outre le faisceau d'un laser,
où le faisceau laser (3) continuellement défocalisé est dirigé via le cône de projection (2) directement sur la surface du substrat (5) ou sur la surface d'une couche en fusion déjà appliquée avec un temps d'interaction prédéterminé, où la puissance du laser est comprise entre 2 et 15 % de la puissance de l'arc plasma et la formation du faisceau est réglée de telle sorte que les intensités du faisceau s'élèvent à quelques 10³ W/cm³ et où la température de la couche appliquée est maintenue à une température déterminée dans la couche, supérieure au processus de refroidissement non influencé, de manière à influencer de manière ciblée les phases en formation dans la couche ou la structure.

2. Procédé selon la revendication 1, **caractérisé en ce que** le faisceau laser (3) est dirigé sur la surface du substrat (5) selon un angle compris entre 0 et 90 ° et/ou selon un angle compris entre 0 et 90° par rapport au cône de projection.

3. Procédé selon la revendication 1 ou 2, **caractérisé en ce que** le faisceau laser (3) est déplacé le long de la surface du substrat (5) en fonction du mouvement relatif du jet de plasma (2).

4. Procédé selon l'une des revendications 1 à 3, **caractérisé en ce que** le revêtement est appliqué sous forme d'une structure multicouches avec plusieurs couches minces individuelles placées les unes au-dessus des autres sur le substrat (5).

5. Procédé selon l'une des revendications 1 à 4, **caractérisé en ce que** le faisceau laser (3) est influencé par un système de miroir pivotant (4) ou un miroir à facettes en ce qui concerne la géométrie de la tache focale et/ou la distribution de l'intensité dans la tache focale.

6. Procédé selon l'une des revendications 1 à 5, **caractérisé en ce que** la puissance du laser est commandée, en fonction de l'emplacement, lors de l'oscillation en deux dimensions du faisceau laser (3) le long de la surface du substrat (5) formant revêtement avec le cône de projection (2) et génère ainsi un profil d'intensité déterminé en trois dimensions dans la tache focale du faisceau laser.

7. Procédé selon l'une des revendications 1 à 6, **caractérisé en ce que** le faisceau laser (3) formant une tache focale rectangulaire est dirigé sur la zone de la surface du substrat (5) à recouvrir, directement, au moins en partie, dans la zone de la couche en formation.

8. Procédé selon l'une des revendications 1 à 7, **caractérisé en ce que** la puissance laser, l'intensité du faisceau laser, les paramètres du plasma, la vitesse de travail et d'avance, le pas transversal et/ou la distance de projection sont réglés en fonction du matériau du substrat et du matériau de revêtement ou plusieurs de ces paramètres sont déterminés les uns par rapport aux autres.

9. Procédé selon l'une des revendications 1 à 8, **caractérisé en ce qu'**un laser Nd:YAG ou à diodes est utilisé.

10. Procédé selon l'une des revendications 1 à 9, **caractérisé en ce qu'**un deuxième laser est utilisé.

11. Procédé selon l'une des revendications 1 à 10, **caractérisé en ce qu'**un faisceau laser divisé en deux faisceaux est dirigé sur la surface du substrat (5).

12. Procédé selon la revendication 10 ou 11, **caractérisé en ce que** les deux faisceaux laser présentent des puissances, des géométries de tache focale et/ou des distributions d'intensité différentes.

13. Procédé selon l'une des revendications 1 à 12, **caractérisé en ce que** des métaux, des alliages métalliques, des matériaux à base de carbures, de la céramique ou des mélanges de ces matériaux sont utilisés comme matériaux de revêtement.

14. Procédé selon la revendication 13, **caractérisé en ce que** le matériau de revêtement est utilisé sous forme de poudre.

15. Procédé selon l'une des revendications 1 à 14, **caractérisé en ce que**, outre le gaz porteur de poudre, un gaz de protection ou un gaz de transformation est utilisé, qui autorise ou empêche la formation de phases déterminées dans le dépôt.

16. Procédé selon la revendication 15, **caractérisé en ce que** de l'azote, de l'argon, de l'hélium, de l'hydrogène, de l'oxygène, du méthane ou des mélanges de ces gaz sont utilisés comme gaz de protection ou gaz de transformation.
